# EUROPEAN PATENT SPECIFICATION

(11) **EP 2 345 826 B1**
(45) Date of publication and mention of the grant of the patent: **07.11.2012**
(21) Application number: 11150904.8
(22) Date of filing: 13.01.2011
(51) Int. Cl.: F16D 66/00, F16D 66/02

(54) **Wear detector for a braking member of a vehicle**
Verschleisssensor für das Bremselement eines Fahrzeugs
Témoin d'usure pour élément de frein de véhicule

(30) Priority: 13.01.2010 IT TO20100013
(43) Date of publication of application: 20.07.2011
(73) Proprietor: I.C.P. S.r.l., Castelnuovo don Bosco (IT)
(72) Inventor: Razzano, Tancredi, 14020, Piova' Massaia (IT)
(74) Representative: Jorio, Paolo

(56) References cited:
- EP-A1- 0 464 347
- EP-A1- 1 098 103
- EP-A1- 2 182 236
- EP-A2- 1 148 267
- DE-U1- 9 010 354

## Description

The present invention relates to a wear detector for a braking member of a vehicle, in particular a brake pad, to which the ensuing treatment will make explicit reference without this implying any loss of generality.

As is known, a brake pad for vehicles comprises a supporting plate, a block of friction material carried by the supporting plate, and a wear detector for detecting a condition of limit wear of the block of friction material.

Known wear detectors comprise an electrical detection circuit or wiring carried by an attachment body, which is made of plastic material and is coupled to the supporting plate in a fixed position and removably for replacement of the detector itself in the event of failure of the detection wiring.

Detection wirings are known comprising an electrical cable bent so as to form a U-shaped terminal portion, which is coupled to the attachment body and comprises a detection stretch designed to come into contact with a brake disk of a wheel of the vehicle: an interruption of the electrical continuity indicates that the detection stretch has been involved by the brake disk and that therefore the condition of wear of the block of friction material has been reached.

The two ends of the electrical cable are fixed to a connector for connecting the wear detector to the wiring system of the vehicle, and are joined to the cable portions carried by the attachment body via respective cable portions arranged in positions set alongside one another within a sheath.

To produce the wear detector, the wiring is pre-assembled by bending the electrical cable in two, fixing the connector to the ends of the cable, for example by co-moulding, and sliding the sheath on the two cable portions set alongside one another, so as to leave the U-shaped terminal portion exposed. After pre-assembly, the U-shaped terminal portion is hooked about the attachment body by inserting the detection stretch in a side groove of the attachment body.

Since the groove is open laterally, the position of the detection stretch is not stable and secure. In other words, the detection stretch can shift from the position envisaged at the bottom of the groove as a result of vibrations or as a result of sliding of the brake disk just before the condition of limit wear of the block of friction material is reached. Obviously, on account of said displacement, the detection stretch might no longer be broken by the brake disk and hence not provide indications on the condition of limit wear.

The aim of the present invention is to provide a wear detector for a braking member of a vehicle that will enable a simple and economic solution to the problems set forth above, maintaining the procedure of pre-assembly of the detection wiring unaltered.

According to the present invention, a wear detector for a braking member of a vehicle is provided as defined by Claim 1.

The invention will now be described with reference to the annexed drawings, which illustrate some non-limiting examples of embodiment thereof and in which wear detectors having an electrical cable bent so as to form a U-shaped terminal portion are known from DE 90 10 354 U1 and EP 0 464 347 A1:
- Figure 1 illustrates, in cross-sectional view, a first preferred embodiment of the wear detector for a braking member of a vehicle according to the present invention;
- Figure 2 is a front view of the wear detector of Figure 1;
- Figure 3 is similar to Figure 1 and illustrates an embodiment of the wear detector for a braking member of a vehicle;

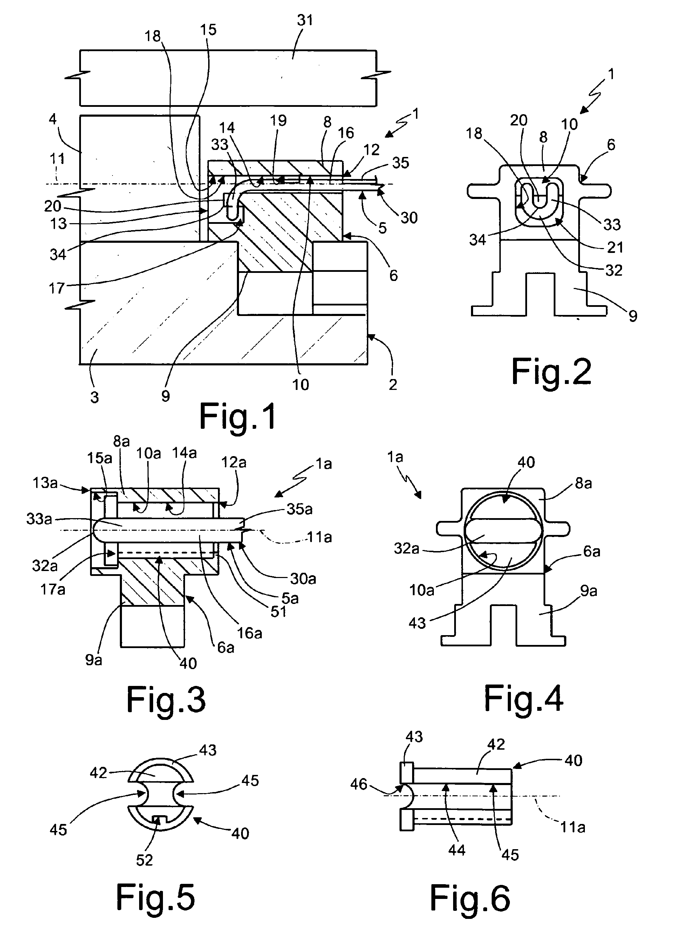

- Figure 3 to 8 disclose an embodiment not forming part of the invention:
- Figure 4 is a front view of the wear detector of Figure 3;
- Figures 5 and 6 are, respectively, a rear view and a side view of a component of the wear detector of Figures 3 and 4;

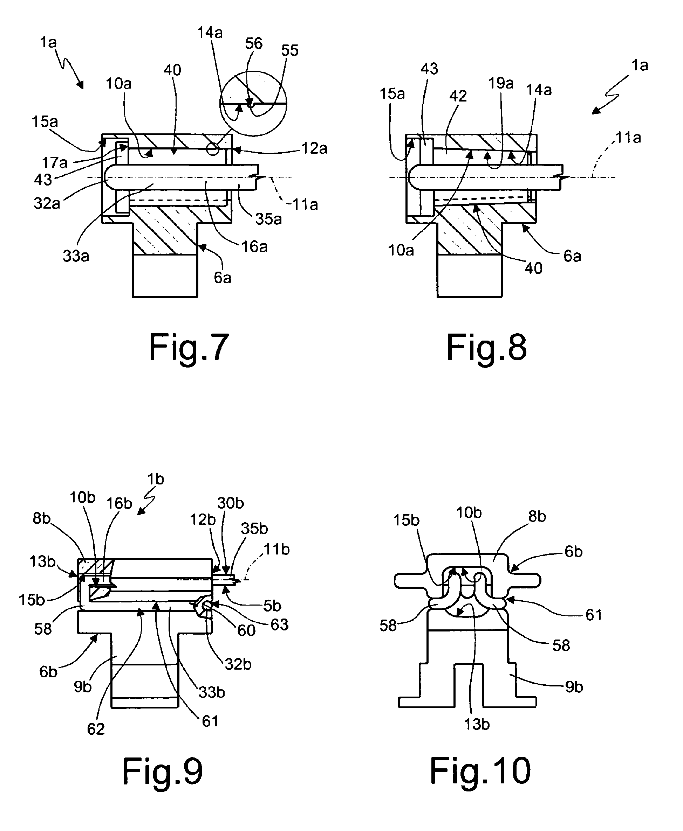

- Figures 7 and 8 are similar to Figure 3 and illustrate respective variants of the wear detector of Figure 3;
- Figure 9 is a side view, with parts sectioned for reasons of clarity, of a second preferred embodiment of the wear detector for a braking member of a vehicle according to the present invention; and
- Figure 10 is a front view of the wear detector of Figure 9.

Designated by 1 in Figure 1 is a wear detector for a braking member 2 of a vehicle (not illustrated). In particular, the braking member is defined by a brake pad comprising a supporting plate 3, and a block 4 of friction material carried by the plate 3.

The detector 1 comprises wiring 5 (partially illustrated) of the type commonly designated by the term "two-pole wiring" and designed to detect a limit condition of wear of the block 4. The detector 1 moreover comprises an attachment body 6, which is designed to be connected to the plate 3 in a fixed position, is made of a single piece of insulating material, for example plastic or ceramic material, and comprises a top portion 8, which supports the wiring, and a bottom portion 9, which is fixed to the plate 3. In particular, the portion 9 defines a slide slidingly coupled to a guide of the plate 3. The portion 8 is provided with a single through hole 10, which extends along an axis 11 from an inlet 12 to an outlet 13. By the term "hole" is meant a passage that is delimited or closed on all sides by a surface.

The hole 10 comprises two opposed portions 14, 15: the portion 14 defines the inlet 12, has a constant cross section along the axis 11, and is engaged by two parallel cable portions 16 of the wiring 5, whereas the portion 15 defines the outlet 13 and is widened and out of line with respect to the portion 14. In particular, the portion 15 is defined by a face 17 orthogonal to the axis 11 and by a side surface 18, which, at the top, defines the prolongation of the side surface 19 of the portion 14. The face 17 carries an appendage or projection 20, which extends in cantilever fashion parallel to the axis 11 substantially in the middle of the portion 15 so as to define an annular space 21 between the projection 20 and the side surface 18.

The cable portions 16 form part of an electrical cable 30 of the wiring 5: when one of the cable portions 16 is sheared, in use, by a brake disk 31, the interruption of the electrical continuity of the cable 30 indicates reaching of the limit condition of wear of the block 4.

The cable 30 is bent in two so as to have one end 32 curved to form a U. The end 32 defines part of a loop-like portion 33 that is run around the projection 20 so as to have the concave part resting directly against a bottom portion 34 of the projection 20. The loop-like portion 33 is bent at approximately 90° with respect to the cable portions 16 so as to be housed in the space 21 in front of the face 17.

The wiring 5 further comprises an outer sheath (not illustrated), which coats two branches 35 of the cable 30. The branches 35 define the prolongations of the respective cable portions 16 on the outside of the body 6. The ends of the branches 35 (not illustrated) define the electrical terminals of the wiring 5 and are fixed to an electrical connector (not illustrated).

During production, the wiring 5 is pre-assembled by bending the cable 30 in two so as to form the U-shaped curve of the end 32, fixing an electrical connector to the ends of the cable 30 (for example, via co-moulding), sliding a sheath on the end 32 and sliding the sheath itself up to the connector so as to keep the branches 35 alongside one another. To install the wiring 5 pre-assembled on the body 6, the end 32 is inserted in the inlet 12, and the cable 30 is pushed axially so as to slide the end 32 into the portion 14 towards the outlet 13. In this connection, the cross section of the portion 14 must be such as to house the end 32 and the two cable portions 16 with slight radial play in order to prevent excessive friction in sliding. Once on the outside of the outlet 13, the end 32 is widened slightly so as to form the loop-like portion 33, which is then bent at approximately 90° downwards. At this point, by pulling the branches 35 towards the outside of the hole 10, the loop-like portion 33 is drawn back into the portion 15 so as to occupy the space 21 and be fitted around the projection 20. The portion 34 of the projection 20 defines a retention shoulder that withholds the end 32 and hence the cable portions 16 from being slid out of the hole 10 towards the inlet 12. At the same time, the side surface of the hole 10 radially withholds both of the cable portions 16. Consequently, the cable portions 16 remain enclosed in a housing and hence remain stably fixed, also in the presence of vibrations and of the action of the brake disk 31 during use.

According to a variant (not illustrated), a projection extends in cantilever fashion in a radial direction starting from a top portion of the side surface 18, i.e., in front of the portion 14. In this way, during installation, the end 32 must pass underneath or alongside the radial projection when it is pushed into the hole 10 towards the outlet 13. In this connection, the face 17 and/or the radial projection preferably have inclined shapes appropriate for favouring penetration of the cable 30 into the hole 10. After widening the end 32 outside the outlet 13, the loop-like portion 33 does not need to be bent at 90° with respect to the cable portions 16 to be brought into engagement against the radial projection.

In a further embodiment (not illustrated), the projection 20 could be absent, and the end 32 could be bent with respect to the cable portions 16 at 180°, i.e., facing the inlet 12, so as to bear axially, with its own convex part, upon the face 17. In this case, it is the face 17 that defines the retention shoulder that prevents the end 32 from sliding back towards the inlet 12. The dimensions of the portion 15 are such as to house the bend backwards and the end 32 substantially without play in order to preserve the bend itself.

Figures 3 to 6 show a detector 1a. The parts of the detector 1a that correspond to those of the detector 1 have been designated by the same reference numbers as the ones used in Figures 1 and 2, followed by the reference letter a.

The portions 14a and 15a are coaxial and substantially cylindrical and are joined together by an annular shoulder 17a. The detector 1a comprises an insert 40 completely housed in the hole 10a and defining a support for the end 32a and for the cable portions 16a. The insert 40 comprises a substantially cylindrical portion 42 housed in the portion 14a, and a flange 43 housed in the portion 15a. The flange 43 is set axially bearing upon the shoulder 17a to prevent the insert 40 from sliding back towards the inlet 12a.

On its own outer surface, the insert 40 has a groove 44 comprising two side portions 45, which are parallel to the axis 11a and are diametrally opposed. The groove 44 further comprises a front portion 46 (Figure 6), which joins the front ends of the portions 45 and is formed on the front face of the flange 43 orthogonally with respect to the axis 11. The loop-like portion 33a (Figure 3) is run around the insert 40 so as to place the cable portions 16a in the respective portions 45 and the end 32a in the portion 46. The portion 46 has a bottom surface that defines the retention shoulder against which the end 32a rests directly to prevent the cable portions 16a from sliding back and out of the hole 10a.

Provided between the insert 40 and the lateral inner surface of the hole 10a is an angular-positioning system that keeps the insert 40 in a fixed angular position about the axis 11a. In particular, the angular-positioning system comprises a rib 51 parallel to the axis 11a on the lateral inner surface of the portion 14a and a corresponding groove 52 provided on the lateral outer surface of the portion 42 and engaged by the rib 51.

During coupling of the wiring 5a pre-assembled on the body 6a, after sliding the end 32a out of the hole 10a and widening it so as to form the loop-like portion 33a, the latter is fitted around the insert 40. The insert 40 with the loop-like portion 33 is then inserted in the hole 10a through the outlet 13a by pulling the branches 35a. Before insertion of the portion 42 in the portion 14a the insert 40 orients itself in an angular position such as to align the groove 52 with the rib 51. A slight radial forcing of the cable portions 16a against the inner surface of the portion 14a enables the insert 40 to be kept axially fixed also in the direction of the outlet 13a.

According to the variant of Figure 7, the inner surface of the portion 14a has a projection 55 that engages a corresponding seat 56 provided on the outer cylindrical surface of the portion 42 and withholds the insert 40 axially in both directions. During installation, the projection 55 snaps into the seat 56 during insertion of the insert 40 in the hole 10a when the flange 43 comes to bear upon the shoulder 17a.

According to the variant of Figure 8, the outer surface of the portion 42 and the inner surface 19a of the portion 14a are frustoconical and converge towards the inlet 12a and rest on one another.

The end 32 is axially withheld by the insert 40, which is in turn axially withheld by the shoulder 17a and/or by the projection 55 and/or by the frustoconical surface 19a. At the same time, the cable portions 16a are withheld radially between the insert 40 and the inner surface of the hole 10a so that they remain stably fixed, also during use.

Figures 9 and 10 show a detector 1b. The parts of the detector 1b that correspond to those of the detector 1 are designated by the same reference numbers as the ones used of Figures 1 and 2, followed by the reference letter b.

At the outlet 13b, the loop-like portion 33b is turned backwards, i.e., towards the inlet 12b, so as to remain joined to the cable portions 16b via respective U-shaped portions 58, which remain housed in a terminal portion 15b of the hole 10b. The loop-like portion 33b is run around the portion 8b of the body 6b so as to rest the end 32b directly against a surface 60 of the portion 8b adjacent to the inlet 12b. Preferably, the loop-like portion 33b is housed in a groove 61, which starts and terminates in the terminal portion 15b of the hole 10b and is provided on the outer periphery of the portion 8b in an intermediate position between the hole 10b and the portion 9b. In particular, the groove 61 comprises: two side grooves 62, which are provided on the side faces of the portion 8b parallel to the axis 11b; and a rear groove 63, which is provided on the same face on which the inlet 12b is provided, joins the rear ends of the grooves 62 and defines the surface 60. In this way, the loop-like portion 33b does not project beyond the outer surface of the portion 8b.

During coupling of the wiring 5b pre-assembled on the body 6b, after sliding the end 32b out of the hole 10b and widening it so as to form the loop-like portion 33b, the latter is turned backwards so as to form the portions 58 and is passed beyond the portion 9b so as to be fitted around the portion 8b. By pulling the branches 35b, the loop-like portion 33b is gripped on the portion 8b, and comes to engage the groove 61. Also in this case, the end 32b is withheld from sliding back through the hole 10b towards the inlet 12b, and the cable portions 16b remain closed on all sides by the lateral inner surface of the hole 10b.

From the foregoing it is evident that the detector 1, 1a, 1b, is extremely simple to assemble and uses a pre-assembled two-pole wiring 5, 5a, 5b. Not only, but the cable portions 16, 16a, 16b remain in a stable fixed position, thanks to the fact that they are both housed in the hole 10, 10a, 10b and hence are withheld radially by the side surface of the hole itself, and thanks to the fact that a retention shoulder withholds the end 32, 32a, 32b to prevent the cable from sliding back and out through the inlet 12, 12a, 12b.

The fact that the retention shoulder defined by the insert 40 or by the projection 20 is inside the hole 10, 10a avoids the presence of external projections and can keep the end 32, 32a within the portion 15, 15a to protect it from damage during transport of the detector and during installation of the detector on the braking member.

On the other hand, the detector according to the arrangement 1b is fast to assemble and enables a body 6b of an extremely simple shape to be obtained.

If during installation of the detector 1, 1a, 1b the wiring 5, 5a, 5b gets damaged, for example on account of accidental tearing, it is possible to replace the wiring in a relatively simple way.

Finally, from the foregoing it is evident that modifications and variations may be made to the detector 1, 1a, 1b, without thereby departing from the scope of protection of the present invention, as defined in the annexed claims.

In particular, the detector could be used for a block-braking member, and/or the connection of the body 6, 6a, 6b to the braking member could be different from the one indicated by way of example, and/or the insert 40 could have a different shape from the one illustrated, and/or the projection 20 or the flange 43 could be external to the hole 10, 10a.

## Claims

1. A wear detector (1) for a braking member of a vehicle, the detector comprising:
- an attachment body (6; 6a; 6b) designed to be coupled to said braking member; and
- wiring (5; 5a; 5b) comprising an electrical cable, which in turn comprises:
- an end (32; 32a; 32b) curved to form a U;
- two cable portions (16; 16a; 16b) carried by said attachment body; and
- two cable branches defining, respectively the prolongations of said cable portions (16; 16a; 16b) outside said attachment body (6; 6a; 6b);
said attachment body (6; 6a; 6b) having a single through hole (10; 10a; 10b) extending along an axis and having an inlet (12; 12a; 12b) engaged by both of said cable portions (16; 16a; 16b) and an outlet (13; 13a; 13b); and said detector comprising retention means (20; 40; 8) carried by said attachment body and engaged by said end (32; 32a; 32b) to prevent said cable portions from sliding back through said inlet said retention means comprising retention shoulder (34; 46; 60); said end resting directly against said retention shoulder **characterized in that** said retention shoulder (34; 60) forms part of said attachment body.

2. The detector according to Claim 1, **characterized in that** said retention shoulder (34; 46) is inside said through hole.

3. The detector according to Claim 2, **characterized in that** said through hole comprises a widened portion (15; 15a) defining said outlet and housing said end.

4. The detector according to Claim 1, **characterized in that** said retention shoulder is defined by a surface (17) orthogonal to said axis (11), and **in that** said end (32) is bent at 180° and has a convex part resting directly against said retention shoulder.

5. The detector according to Claim 1, **characterized in that** said retention shoulder (34) is defined by a projection (20); said end defining part of a loop-like portion (33) running around said projection (20).

6. The detector according to Claim 1, **characterized in that** said retention shoulder (60) is outside said through hole (10b); said end (32b) defining part of a loop-like portion (33b), which is outside said outlet (13b), is bent backwards with respect to the cable portions (16b), and is run around said attachment body (6b).

7. The detector according to Claim 6, **characterized in that** said loop-like portion (33b) is housed in a groove (61), which is provided on the outer periphery of said attachment body (6b); said groove (61) starting and terminating in a terminal portion (15b) of said through hole (10b).

## Patentansprüche

1. Verschleißdetektor (1) für ein Bremselement eines Fahrzeugs, wobei der Detektor umfasst:
- einen Befestigungskörper (6; 6a; 6b), der entworfen ist, um mit dem Bremselement gekoppelt zu sein; und
- eine Verdrahtung (5; 5a; 5b), die ein elektrisches Kabel enthält, das seinerseits umfasst:
- ein Ende (32; 32a; 32b), das gekrümmt ist, um ein U zu bilden;
- zwei Kabelabschnitte (16; 16a; 10b), die von dem Befestigungskörper getragen werden; und
- zwei Kabelverzweigungen, die die jeweiligen Verlängerungen der Kabelabschnitte (16; 16a; 16b) außerhalb des Befestigungskörpers (6; 6a; 6b) definieren;
wobei der Befestigungskörper (6; 6a; 6b) ein einziges Durchgangsloch (10; 10a; 10b) besitzt, das sich längs einer Achse erstreckt und einen Einlass (12; 12a; 12b), der mit beiden Kabelabschnitten (16; 16a; 16b) in Eingriff ist, und einen Auslass (13; 13a; 13b) besitzt; und wobei der Detektor Haltemittel (20; 40; 8) aufweist, die durch den Befestigungskörper getragen werden und mit dem Ende (32; 32a; 32b) in Eingriff sind, um zu verhindern, dass die Kabelabschnitte durch den Einlass zurückgleiten, wobei die Haltemittel eine Halteschulter (34; 46; 60) aufweisen; wobei das Ende direkt an der Halteschulter auslegt, **dadurch gekennzeichnet, dass** die Halteschulter (34; 60) einen Teil des Befestigungskörpers bildet.

2. Detektor nach Anspruch 1, **dadurch gekennzeichnet, dass** sich die Halteschulter (34; 46) innerhalb des Durchgangslochs befindet.

3. Detektor nach Anspruch 2, **dadurch gekennzeichnet, dass** das Durchgangsloch einen erweiterten Abschnitt (15; 15a) aufweist, der den Auslass definiert und das Ende aufnimmt.

4. Detektor nach Anspruch 1, **dadurch gekennzeichnet, dass** die Halteschulter durch eine Oberfläche (17) senkrecht zu der Achse (11) definiert ist und dass das Ende (32) um 180° gebogen ist und einen konvexen Abschnitt besitzt, der direkt an der Halteschulter anliegt.

5. Detektor nach Anspruch 1, **dadurch gekennzeichnet, dass** die Halteschulter (34) durch einen Vorsprung (20) definiert ist; wobei der das Ende definierende Abschnitt eines schleifenartigen Abschnitts (33) um den Vorsprung (20) verläuft.

6. Detektor nach Anspruch 1, **dadurch gekennzeichnet, dass** sich die Halteschulter (60) außerhalb des Durchgangslochs (10b) befindet; das Ende (32b), das einen Teil eines schleifenartigen Abschnitts (33b) definiert, der sich außerhalb des Auslasses (13b) befindet, in Bezug auf die Kabelabschnitte (16b) nach hinten gebogen ist und um den Befestigungskörper (6b) verläuft.

7. Detektor nach Anspruch 6, **dadurch gekennzeichnet, dass** der schleifenartige Abschnitt (33b) in einer Nut (61) aufgenommen ist, die am äußeren Umfang des Befestigungskörpers (6b) vorgesehen ist; wobei die Nut (61) in einem Endabschnitt (15b) des Durchgangslochs (10b) beginnt und endet.

## Revendications

1. Détecteur d'usure **(1)** pour un élément de freinage d'un véhicule, le détecteur comprenant :
- un corps de fixation (6 ; 6a ; 6b) conçu de façon à être couplé audit élément de freinage ; et
- un câblage (5 ; 5a ; 5b) comprenant un câble électrique, qui comprend lui-méme :
- une extrémité (32 ; 32a ; 32b) incurvée de façon à former un U ;
- deux parties de câble (16 ; 16a ; 16b) portées par ledit corps de fixation ; et
- deux branches de câble définissant, respectivement, les prolongations desdites parties de câble (16 ; 16a ; 16b) à l'extérieur dudit corps de fixation (6 ; 6a ; 6b) ;
ledit corps de fixation (6 ; 6a ; 6b) comportant un trou traversant unique (10 ; 10a ; 10b) s'étendant le long d'un axe et comportant un orifice d'entrée (12 ; 12a ; 12b) venant en prise avec les deux desdites parties de câble (16 ; 16a ; 16b) et un orifice de sortie (13 ; 13a ; 13b) ; et ledit détecteur comprenant des moyens de rétention (20 ; 40 ; 8) portés par ledit corps de fixation et venant en prise avec ladite extrémité (32 ; 32a ; 32b) de façon à empêcher lesdites parties de câble de glisser vers l'arrière à travers ledit orifice d'entrée, lesdits moyens de rétention comprenant un épaulement de rétention (34 ; 46 ; 60) ; ladite extrémité reposant directement contre ledit épaulement de rétention, **caractérisé en ce que** ledit épaulement de rétention (34 ; 60) fait partie dudit corps de fixation.

2. Détecteur selon la revendication 1, **caractérisé en ce que** ledit épaulement de rétention (34 ; 46) se trouve à l'intérieur dudit trou traversant.

3. Détecteur selon la revendication 2, **caractérisé en ce que** ledit trou traversant comprend une partie élargie (15 ; 15a) définissant ledit orifice de sortie et renfermant ladite extrémité.

4. Détecteur selon la revendication 1, **caractérisé en ce que** ledit épaulement de rétention est défini par une surface (17) orthogonale audit axe (11), et **en ce que** ladite extrémité (32) est incurvée à 180° et comporte une partie convexe reposant directement contre ledit épaulement de rétention.

5. Détecteur selon la revendication 1, **caractérisé en ce que** ledit épaulement de rétention (34) est défini par une saillie (20) ; ladite extrémité définissant une partie d'une partie en forme de boucle (33) s'étendant autour de ladite saillie (20).

6. Détecteur selon la revendication 1, **caractérisé en ce que** ledit épaulement de rétention (60) se trouve à l'extérieur dudit trou traversant (10b) ; ladite extrémité (32b) définissant une partie d'une partie en forme de boucle (33b), qui se trouve à l'extérieur dudit orifice de sortie (13b), étant incurvée vers l'arrière par rapport aux parties de câble (16b), et s'étendant autour dudit corps de fixation (6b).

7. Détecteur selon la revendication 6, **caractérisé en ce que** ladite partie en forme de boucle (33b) est renfermée dans une rainure (61), qui est réalisée sur la périphérie extérieure dudit corps de fixation (6b) ; ladite rainure (61) commençant et s'achevant dans une partie terminale (15b) dudit trou traversant (10b).
